# FASCICULE DE BREVET EUROPEEN

(11) **EP 3 765 959 B1**
(45) Date de publication et mention de la délivrance du brevet: **14.02.2024**
(21) Numéro de dépôt: 19713114.7
(22) Date de dépôt: 12.03.2019
(51) Int. Cl.: G06F 9/4401, H04L 41/00, H04L 41/08, H04L 41/0816, G06F 11/07

(54) **GESTION DES DONNEES DE CONFIGURATION POUR UN SERVEUR MULTIMODULE**
VERWALTUNG VON KONFIGURATIONSDATEN FÜR EINEN SERVER MIT MEHREREN MODULEN
MANAGEMENT OF CONFIGURATION DATA FOR A MULTI-MODULE SERVER

(30) Priorité: 12.03.2018 FR 1852116
(43) Date de publication de la demande: 20.01.2021
(73) Titulaire: Bull SAS, 78340 Les Clayes-sous-Bois (FR)
(72) Inventeur: BRASSAC, Claude, 78100 SAINT GERMAIN EN LAYE (FR); BRUNET, Michel, 49190 DENEE (FR); REBAI, Amine, PHOENIX, Arizona 85029 (US)
(74) Mandataire: Novagraaf Technologies
(86) Numéro de dépôt international: PCT/FR2019/050533
(87) Numéro de publication internationale: WO 2019/175499

(56) Documents cités:
- EP-A2- 2 998 877
- US-A1- 2013 198 504
- US-A1- 2014 123 121
- HONGSONG CHEN ET AL: "Design and Implementation of Cloud Server Remote Management System Based on IMPI Protocol", 2015 IEEE 12TH INTL CONF ON UBIQUITOUS INTELLIGENCE AND COMPUTING AND 2015 IEEE 12TH INTL CONF ON AUTONOMIC AND TRUSTED COMPUTING AND 2015 IEEE 15TH INTL CONF ON SCALABLE COMPUTING AND COMMUNICATIONS AND ITS ASSOCIATED WORKSHOPS (UIC-ATC-SCALCOM), IE, 10 août 2015 (2015-08-10), pages 1475-1478, XP032926474, DOI: 10.1109/UIC-ATC-SCALCOM-CBDCOM-IOP.2015.26 6
- Yung-Chin Fang ET AL: "Managing and Monitoring - High-Performance Computing Clusters with IPMI", Dell Power Solutions, October 2004, 1 octobre 2004 (2004-10-01), pages 58-63, XP055521340, Extrait de l'Internet: URL:https://pdfs.semanticscholar.org/3a93/ 1d8ce6be1593a34ff9c9c83801aba1435b0f.pdf [extrait le 2018-11-06]

## Description

### DOMAINE DE L'INVENTION

La présente invention est relative à la gestion des données de configuration dans un système de traitement de l'information. En particulier, l'invention permet d'améliorer cette gestion dans le cadre d'un système multiprocesseur composé de plusieurs modules.

### CONTEXTE DE L'INVENTION

Un serveur, ou plus généralement tout système de traitement de l'information, comprend un logiciel élément, BIOS (pour « Basic Input-Output System » en langue anglaise), stockée dans une mémoire de type flash, ou NVRAM (pour « Non Volatile RAM ») qui permet notamment la configuration de certains aspects du serveur lors de son démarrage, à partir de données de configuration, typiquement également stockée dans cette mémoire NVRAM.

Lors du démarrage, l'utilisateur du serveur dispose en général de la possibilité d'accéder à une interface homme-machine lui permettant de modifier tout ou partie de ces données de configuration.

Toutefois, certains serveurs sont multimodules, c'est-à-dire composés d'une pluralité de modules interconnectés de sorte à ne constituer qu'une unique plateforme pour un système d'exploitation déployé sur le serveur. Un tel serveur multimodule est notamment décrit dans la demande de brevet EP2998877.

Le document US 2013/198504 A1 décrit un procédé permettant de configurer le BIOS d'un serveur comprenant un environnement BIOS et une unité de management tel qu'un contrôleur de gestion BMC. Dans un premier mode de réalisation, à chaque démarrage du serveur, l'environnement BIOS envoie ses données de configuration au BMC qui les sauvegarde. Ainsi, il est possible de visualiser et de modifier les données de configuration du BIOS, via un système externe connecté au BMC, sans avoir à démarrer le système informatique ou à le mettre dans un état actif. Ce document indique que, suite à une modification des données de configuration, le BMC peut fournir ces données à l'environnement BIOS lors du redémarrage du serveur.

Le document US 2014/123121 A1 décrit un procédé de mise à jour simultanée du logiciel élémentaire BIOS de chacun des noeuds serveurs d'un rack comprenant un contrôleur de gestion de rack RMC. En particulier, le contrôleur de gestion de rack RMC génère un message de mise à jour et le transmet simultanément aux contrôleurs de gestion BMC de chaque noeud serveur. Selon le message de mise à jour, les contrôleurs de gestion BMC téléchargent respectivement le fichier de mise à jour à partir du contrôleur de gestion de rack RMC et contrôlent les mémoires pour entrer en mode de récupération, de manière à écrire le fichier de mise à jour dans la mémoire de chacun des noeuds serveurs pour mettre à jour le logiciel BIOS de chaque système d'entrée-sortie de base respectivement stockés dans ladite mémoire.

Chacun des modules dispose nécessairement de son propre logiciel élémentaire BIOS lui permettant de démarrer. Toutefois, dans la mesure où l'ensemble des modules doit être vu comme une plateforme unique, l'unicité et la cohérence des données de configuration pour tous les modules est primordial afin d'assurer un bon démarrage et un bon fonctionnement du serveur.

En outre, les outils existants permettant d'accéder au contenu de la mémoire NVRAM ne permettent d'accéder aux données de configuration stockées dans la mémoire du module dit « maître » au moment de l'accès. Dès lors, s'il modifie un paramètre de configuration, la cohérence entre les différents modules sera perdue.

### RESUME DE L'INVENTION

Le but de la présente invention est de permettre d'atteindre une telle cohérence des données de configuration entre l'ensemble des modules, de sorte que chacun puisse démarrer avec les mêmes données de configuration, et également de permettre à un utilisateur de modifier facilement tout ou partie des données de configuration tout en conservant cette cohérence entre l'ensemble des modules.

A cette fin, la présente invention propose un serveur comprenant une pluralité de modules de traitement de l'information, de sorte à former une plateforme unifiée pour un système d'exploitation déployé sur ledit serveur, chaque module possédant un logiciel élémentaire, BIOS, prévu pour utiliser des données de configuration lors du démarrage dudit module, ledit serveur étant en outre prévu pour permettre la modification d'au moins une donnée de configuration, et étant caractérisé en ce que chaque module comprend en outre un contrôleur de gestion, BMC, prévu pour mémoriser lesdites données de configuration dans un mémoire associée distincte de la mémoire mémorisant ledit logiciel élémentaire, BIOS, et pour transmettre, lors de la modification d'au moins une donnée de configuration, lesdites données à des contrôleurs de gestion associés aux autres modules de ladite pluralité, et
en ce que ledit logiciel élémentaire est prévu pour, lors d'un démarrage dudit module, récupérer lesdites données de configuration auprès dudit contrôleur de gestion.

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdits contrôleurs de gestion de ladite pluralité de modules peuvent communiquer au moyen d'un réseau interne audit serveur ;
- lesdits contrôleurs de gestion transmettent lesdites données de configuration dans des messages conformes au standard IPMI ;
- lesdites mémoires associées sont des cartes SD ;

Un autre aspect de l'invention concerne un procédé pour la gestion des données de configuration d'un module de traitement de l'information appartenant à un serveur comportant une pluralité de modules connectés de sorte à former une plateforme unifiée pour un système d'exploitation déployé sur ledit serveur, chaque module possédant un logiciel élémentaire, BIOS, et chaque module comprenant en outre un contrôleur de gestion, BMC, lesdites données étant utilisées pour le démarrage dudit module par ledit logiciel élémentaire, BIOS, dudit module, et ledit procédé comportant
- la modification d'au moins une donnée de configuration;
- la transmission de ladite au moins une donnée de configuration audit contrôleur de gestion du module, BMC,
- la mémorisation par ledit contrôleur, BMC, de ladite au moins une donnée de configuration dans une mémoire associée distincte de la mémoire mémorisant ledit logiciel élémentaire, BIOS, et la transmission de ladite donnée à des contrôleurs de gestion associés aux autres modules de ladite pluralité.

Suivant des modes de réalisation préférés, le procédé selon l'invention comprend une ou plusieurs des caractéristiques suivantes qui peuvent être utilisées séparément ou en combinaison partielle entre elles ou en combinaison totale entre elles :
- ladite au moins une donnée de configuration est modifiée lors du démarrage dudit module par ledit logiciel élémentaire, en affichant une interface homme machine sur un terminal connecté audit serveur permettant à un utilisateur de visualiser et opérer des modifications sur des données de configuration ;
- ladite au moins une donnée de configuration est modifiée au moyen d'une interface externe de gestion dudit contrôleur ;
- les transmissions de ladite au moins une donnée de configuration vers ledit contrôleur de gestion, BMC, sont conformes à l'interface IPMI ;

Un autre aspect de l'invention concerne un procédé de démarrage d'un module de traitement de l'information appartenant à un serveur comportant une pluralité de modules connectés de sorte à former une plateforme unifiée pour un système d'exploitation déployé sur ledit serveur, chaque module possédant un logiciel élémentaire, BIOS, prévu pour utiliser des données de configuration lors du démarrage dudit module, et chaque module comprenant en outre un contrôleur de gestion, BMC, comportant
- l'émission par ledit logiciel élémentaire, BIOS, dudit module d'une requête audit contrôleur de gestion, BMC, dudit module,
- la récupération de données de configuration par ledit contrôleur de gestion, BMC, dudit module dans une mémoire distincte de la mémoire mémorisant ledit logiciel élémentaire, BIOS, et transmission desdites données audit logiciel élémentaire, BIOS, en réponse à ladite requête,
- démarrage dudit module en fonction desdites données de configuration.

Un autre aspect de l'invention concerne un programme d'ordinateur comprenant des instructions de programme pour l'exécution d'un procédé tel que précédemment décrit, lorsque ledit programme est exécuté sur un processeur.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

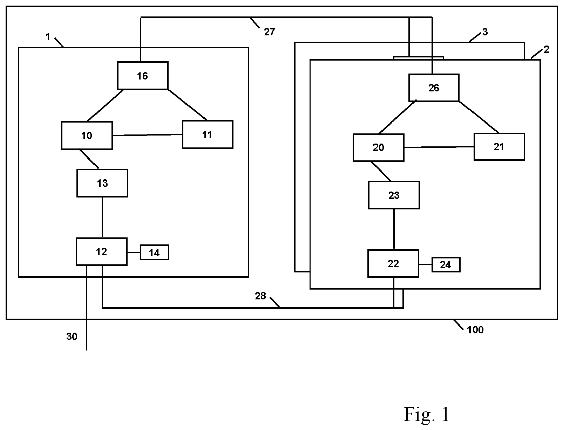

La figure 1 représente schématiquement un exemple de serveur multimodule selon un mode de réalisation de l'invention.

### DESCRIPTION DETAILLEE DE L'INVENTION

La figure 1 représente un mode de réalisation d'un serveur 100 comportant une pluralité de modules 1, 2, 3. Trois modules sont représentés sur la figure, mais dans la pratique un plus grand nombre de modules peuvent être mis en place, typiquement 8 ou 16. Les modules peuvent être identiques ou comporter des différences suffisamment minimes pour que la pluralité des modules puisse être considérée comme une plateforme unique par un système d'exploitation déployé sur le serveur 100.

Chacun des modules peut comporter plusieurs processeurs 10, 11, 20, 21, ou CPU (pour « Central Processing Unit » en anglais). Dans l'exemple de la figure 1, chaque module est « bi-socket », c'est-à-dire composé de deux processeurs.

Les processeurs d'un même module sont interconnectés entre eux via une liaison de type QPI (pour « QuickPath Interconnect ») ou UPI (« Ultra Path Interconnect »), etc.

Ce type de liaisons, connues en soi, permet d'interconnectés des processeurs partageant un même espace d'adressage. Elles sont par exemple décrites dans l'encyclopédie participative wikipedia : https://en.wikipedia.org/wiki/Intel_UltraPath_Interconnect

Chacun des modules comporte également une mémoire 13, 23 permettant de stocker le logiciel élémentaire BIOS. Les deux processeurs 10, 11, 20, 21 d'un même module partagent donc un même logiciel élémentaire BIOS et se synchronise pour y accéder.

Lors du démarrage d'un module, le logiciel élémentaire stocké dans la mémoire 13, 23 est déclenché et utilise des données de configuration pour démarrer correctement le module.

Chacun des modules comprend également un élément de communication 16, 26 permettant d'établir une liaison entre les processeurs 10, 11, 20, 21 de l'ensemble des modules.

L'interconnexion 27 entre les éléments de communication 16, 26 est typiquement un lien ou un ensemble de liens à haute vitesse.

Il peut s'agir par exemple d'un réseau de type XQPI, pour « eXtended QuickPath Interconnect », ou SCI (Scalable Cohérent Interconnect), qui est une solution développée par la société Bull et disponible dans le commerce.

Les éléments de communication 16, 26 peuvent être des BCS, pour « Bull Cohérence Switch » ou tout autre XNC (pour « eXternal Node Controller ») disponible dans le commerce. Ces éléments de communication, en collaboration avec l'interconnexion 27, permettent d'obtenir la cohérence souhaitée de mémoire et de « cache » (ou mémoire tampon), tout en atteignant des bonnes performances de débit et de latence.

D'autres solutions sont également possibles.

Ainsi, cette interconnexion 27 et les éléments de communication 16, 26, permettent de donner au système d'exploitation et donc aux applications déployées sur le serveur la vision d'une mémoire unique pour l'ensemble des modules 1, 2, 3. Autrement dit, du point du vue de ce système d'exploitation et des applications, les modules 1, 2, 3 forment une plateforme unique ; le fait que le serveur est composé d'une pluralité de modules est fonctionnellement transparent pour eux.

Par ailleurs, chaque module comprend un contrôleur de gestion 12, 22 ou BMC pour « Baseboard Management Controller » en langue anglaise. Le contrôleur de gestion 12, 22 est principalement un processeur spécialisé permettant de superviser, et contrôler, l'état physique du module 1, 2 respectif auquel il appartient.

Selon un mode de réalisation, les contrôleurs de gestion 12, 22 sont interconnectés par un réseau 28, afin d'échanger des informations de supervision et de contrôle, de sorte que chacun des contrôleurs de gestion ait une vision globale de l'ensemble des modules du serveur 100. Ainsi, une application externe de gestion d'équipement peut interroger n'importe quel contrôleur de gestion 12, 22 et être à même de superviser et contrôler le serveur 100, en prenant en compte l'ensemble des modules le composant.

Typiquement, le contrôleur de gestion peut superviser, et éventuellement contrôler, différents éléments embarqués au sein du module : capteurs de température, ventilateurs, capteurs d'humidité, etc. Typiquement également, ce contrôleur de gestion est conforme au standard IPMI (« Intelligent Platform Management Interface »). Une application externe de gestion d'équipement peut interagir avec le contrôleur de gestion, 12, 22 au moyen d'un accès, typiquement un accès Ethernet, 30 et de commandes conformes au standard IPMI.

Les spécifications du standard IPMI sont notamment disponibles sur le site de la société Intel.
https://www.intel.com/content/www/us/en/servers/ipmi/ipmi-home. html

Selon l'invention, les contrôleurs de gestion, BMC, 12, 22, mémorisent les données de configuration dans des mémoires respectives, 14, 24, qui leur sont associés. Autrement dit, les données de configuration ne sont pas stockées dans la mémoire NVRAM 13, 23 associée au logiciel élémentaire BIOS, mais « déportées » sur un élément distinct et hétérogène, par rapport à l'architecture typique d'un système multiprocesseur.

Cette mémoire associée peut être une carte SD (pour « Secure Digital »), par exemple, dont le lecteur est directement connecté et piloté par le contrôleur de gestion correspondant.

En outre, les contrôleurs de gestion 12, 22 sont prévus pour transmettre, lors de la modification d'une ou plusieurs données de configuration, ces données aux contrôleurs de gestion des autres modules du serveur. Les contrôleurs de gestion mémorisent alors les données reçus au sein de leur mémoires respectives, 14, 24. Ainsi, le contenu des mémoires (cartes SD) associées à chaque BMC est continuellement synchronisé et cohérent.

La transmission des données de configuration entre les contrôleurs de gestion des différents modules constitutifs d'un serveur se fait via le réseau 28. Ce réseau peut être un réseau Ethernet.

Préférentiellement, les données de configuration sont transmises selon le standard IPMI. L'interface de gestion intelligente du matérielle, IPMI, est un ensemble de spécifications d'interfaces entre le BMC, le BIOS et tout logiciel distant ou s'exécutant sur le serveur 100.

IPMI n'est donc pas prévu pour des échanges entre BMC, ni pour la transmission de données de configurations propres au BIOS. Ces spécifications ont donc été étendues afin de pouvoir répondre aux problèmes de la présente invention.

Les données de configuration peuvent être modifiées de deux façons principales.

Selon une première façon, une ou plusieurs données de configuration sont modifiées lors du démarrage dudit module par le logiciel élémentaire BIOS, en affichant une interface homme machine sur un terminal connecté au serveur qui permet à un utilisateur de visualiser et opérer des modifications sur des données de configuration. De façon classique, l'utilisateur peut modifier des valeurs en naviguant entre plusieurs pages de l'interface homme-machine. Lorsqu'il choisit de sauvegarder ses choix, le logiciel élémentaire BIOS transmet une commande au contrôleur de gestion de son module. Cette commande contient les données de configuration modifiées et peut être conforme au standard IPMI.

Selon une seconde façon, une ou plusieurs données de configuration sont modifiées au moyen d'une interface externe de gestion 30 du contrôleur de gestion. Une application extérieure peut transmettre des commandes IPMI au contrôleur de gestion 12, 22 pour modifier une ou plusieurs données de configuration.

Il est à noter que le logiciel élémentaire BIOS n'est pas impliqué dans cette deuxième façon de faire.

Dans les deux situations, le module de gestion 12, 22 sauvegarde les données de configuration modifiées dans la mémoire associée 14, 24, et transmet ces données modifiées aux autres modules de gestion via le réseau 28.

Cette réplication entre BMC permet d'assurer l'unicité et la cohérence des données de configuration entre tous les modules du serveur et ainsi de pouvoir initialiser correctement le serveur lors de son démarrage.

Lors du démarrage du serveur 100, le logiciel élémentaire BIOS de chaque module émets une requête au contrôleur de gestion de son module respectif. À réception, celui-ci récupère l'ensemble des données de configuration dans la mémoire associée, puis les transmet au logiciel élémentaire, en réponse à sa requête. Tant la requête que la réponse peuvent être conformes au standard IPMI.

Le module peut alors démarrer en fonction de ces données de configuration.

On comprend alors que, puisque les données de configuration sont cohérentes sur l'ensemble des modules, ceux-ci démarrent selon une même configuration. Dès lors, du point de vue d'une application, le basculement d'un module à une autre sera totalement transparent, et aucun dysfonctionnement du serveur ne sera induit par des incohérences de configuration entre les différents modules constitutifs du serveur.

De la même façon que pour la modification, les données de configuration, peuvent être consultées d'au moins deux façons principales.

Selon une première façon, lors du démarrage du module, le logiciel élément BIOS transmet une requête au contrôleur de gestion de son module afin de récupérer les données de configuration stockées dans sa mémoire associée. Il peut ensuite afficher les données récupérer via une interface homme machine sur un terminal connecté au serveur. L'utilisateur peut alors visualiser les données de configuration, notamment en naviguant entre plusieurs pages de l'interface homme-machine. Les commandes échangées entre le logiciel élémentaire et le contrôleur de gestion peuvent être conformes au standard IPMI.

Selon une seconde façon, Une application extérieure peut transmettre des commandes IPMI au contrôleur de gestion 12, 22 via l'interface externe de gestion 30 afin de récupérer les données de configuration. Elle peut transmettre une commande visant à récupérer une donnée de configuration particulière, en indiquant son identifiant, et en récupérant sa valeur en retour. Elle peut également transmettre une commande visant à récupérer l'ensemble des données de configuration.

Il est à noter que le logiciel élémentaire BIOS n'est pas impliqué dans cette deuxième façon de faire.

Encore une fois, la réplication entre les BMC permet à l'utilisateur de visualiser les données de configuration du module actif, en ayant la garantie que les mêmes valeurs de configuration sont également mises en place pour les autres modules du serveur.

Un utilisateur peut vouloir remettre les données de configuration à leur valeur par défaut. Ceci peut également être effectué de deux façons

Selon une première façon, l'utilisateur peut accéder à une option de « réinitialisation » accessible sur l'interface homme-machine déclenchée par l'élément logiciel BIOS. Selon une seconde façon, une application extérieure peur transmettre une commande (IPMI par exemple) au contrôleur de gestion via l'interface externe de gestion.

Dans les deux cas, lorsque le contrôleur de gestion reçoit une commande de réinitialisation, il modifie les données de configuration pour les remettre à leurs valeurs initiales. Pour ce faire, il peut par exemple détruire un fichier courant contenant les valeurs actuelles des données de configuration et copier à sa place un fichier « d'usine » contenant les valeurs initiales de l'ensemble des données de configuration, telles que fixées par le fabriquant du module.

Ces actions sont répliquées sur les autres modules en utilisant le réseau 28.

Comme évoqué précédemment, le logiciel élémentaire BIOS des modules 1, 2, 3 est modifié afin que les accès vers la mémoire NVRAM où, habituellement, sont stockées les données de configuration, sont remplacés par une interface (par exemple IPMI) vers le contrôleur de gestion BSC.

Le contrôleur de gestion, BMC, est également modifié pour prendre en charge des nouvelles commandes provenant du logiciel élémentaire BIOS ou d'une application extérieure.

Bien entendu, la présente invention n'est pas limitée aux exemples et au mode de réalisation décrits et représentés, mais elle est susceptible de nombreuses variantes accessibles à l'homme de l'art.

## Revendications

1. Serveur (100) comprenant une pluralité de modules de traitement de l'information (1, 2, 3), de sorte à former une plateforme unifiée pour un système d'exploitation déployé sur ledit serveur, chaque module possédant un logiciel élémentaire, BIOS (13, 23), prévu pour utiliser des données de configuration lors du démarrage dudit module, ledit serveur étant en outre prévu pour permettre la modification d'au moins une donnée de configuration, et étant **caractérisé**
**en ce que** chaque module comprend en outre un contrôleur de gestion, BMC (12, 22), prévu pour mémoriser lesdites données de configuration dans une mémoire associée (14, 24) distincte de la mémoire mémorisant ledit logiciel élémentaire, BIOS, et pour transmettre, lors de la modification d'au moins une donnée de configuration, lesdites données à des contrôleurs de gestion associés aux autres modules de ladite pluralité, et
**en ce que** ledit logiciel élémentaire est prévu pour, lors d'un démarrage dudit module, récupérer lesdites données de configuration auprès dudit contrôleur de gestion.

2. Serveur (100) selon la revendication précédente, dans lequel lesdits contrôleurs de gestion (12, 22) de ladite pluralité de modules peuvent communiquer au moyen d'un réseau (28) interne audit serveur (100).

3. Serveur (100) selon l'une des revendications précédentes, dans lequel lesdits contrôleurs de gestion transmettent lesdites données de configuration dans des messages conformes au standard IPMI.

4. Serveur (100) selon l'une des revendications précédentes, dans lequel lesdites mémoires associées sont des cartes SD.

5. Procédé pour la gestion des données de configuration d'un module de traitement de l'information appartenant à un serveur comportant une pluralité de modules connectés de sorte à former une plateforme unifiée pour un système d'exploitation déployé sur ledit serveur, chaque module possédant un logiciel élémentaire, BIOS (13, 23), et chaque module comprenant en outre un contrôleur de gestion, BMC (12,22), lesdites données étant utilisées pour le démarrage dudit module par ledit logiciel élémentaire,
BIOS, dudit module, et ledit procédé comportant
- la modification d'au moins une donnée de configuration;
- la transmission de ladite au moins une donnée de configuration audit contrôleur de gestion du module, BMC,
- la mémorisation par ledit contrôleur, BMC, de ladite au moins une donnée de configuration dans une mémoire associée, distincte de la mémoire mémorisant ledit logiciel élémentaire, et la transmission de ladite donnée à des contrôleurs de gestion associés aux autres modules de ladite pluralité.

6. Procédé selon la revendication précédente, dans lequel ladite au moins une donnée de configuration est modifiée lors du démarrage dudit module par ledit logiciel élémentaire, en affichant une interface homme machine sur un terminal connecté audit serveur permettant à un utilisateur de visualiser et opérer des modifications sur des données de configuration.

7. Procédé selon l'une des revendications précédentes, dans lequel ladite au moins une donnée de configuration est modifiée au moyen d'une interface externe de gestion (30) dudit contrôleur.

8. Procédé selon l'une des revendications précédentes, dans lequel les transmissions de ladite au moins une donnée de configuration vers ledit contrôleur de gestion, BMC, sont conformes à l'interface IPMI.

9. Procédé de démarrage d'un module de traitement de l'information appartenant à un serveur comportant une pluralité de modules connectés de sorte à former une plateforme unifiée pour un système d'exploitation déployé sur ledit serveur, chaque module possédant un logiciel élémentaire, BIOS (13, 23), prévu pour utiliser des données de configuration lors du démarrage dudit module, et chaque module comprenant en outre un contrôleur de gestion, BMC (12,22), comportant
- l'émission par ledit iz logiciel élémentaire, BIOS, dudit module d'une requête audit contrôleur de gestion, BMC, dudit module,
- la récupération de données de configuration par ledit contrôleur de gestion, BMC, dudit module,
dans une mémoire associée distincte de la mémoire mémorisant ledit logiciel élémentaire, BIOS, , et transmission desdites données audit logiciel élémentaire en réponse à ladite requête,
- démarrage dudit module en fonction desdites données de configuration.

10. Programme d'ordinateur comprenant des instructions de programme pour l'exécution d'un procédé selon l'une des revendications 5 à 9, lorsque ledit programme est exécuté sur un processeur.

## Patentansprüche

1. Server (100) umfassend eine Vielzahl von Modulen zur Informationsverarbeitung (1, 2, 3), um eine einheitliche Plattform für ein auf dem Server eingesetztes Betriebssystem zu bilden, wobei jedes Modul über eine grundlegende Software verfügt, Basic Input Output Software BIOS (13, 23), die dazu vorgesehen ist, die Konfigurationsdaten bei Inbetriebnahme des Moduls zu verwenden, wobei der Server ferner dazu vorgesehen ist, die Modifikation von mindestens einen Konfigurationsdaten zu ermöglichen, **dadurch gekennzeichnet,**
**dass** jedes Modul ferner eine Verwaltungssteuerung, BMC (12, 22), umfasst, die dazu vorgesehen ist, die Konfigurationsdaten in einem zugeordneten Speicher (14, 24) zu speichern, der von dem die grundlegende Software, BIOS, speichernden Speicher getrennt ist, und bei der Modifikation von mindestens einem Satz Konfigurationsdaten die Daten an die Verwaltungssteuerungen zu senden, die den anderen Modulen der Vielzahl von Modulen zugeordnet sind, und
**dass** die grundlegende Software dazu vorgesehen ist, bei Inbetriebnahme des Moduls diese Konfigurationsdaten von der Verwaltungssteuerung wiederherzustellen.

2. Server (100) nach dem vorstehenden Anspruch, wobei die Verwaltungssteuerungen (12, 22) von der Vielzahl von Modulen mittels eines internen Netzes (28) mit dem Server (100) kommunizieren können.

3. Server (100) nach einem der vorstehenden Ansprüche, wobei die Verwaltungssteuerungen die Konfigurationsdaten in Nachrichten gemäß dem IPMI-Standard senden.

4. Server (100) nach einem der vorstehenden Ansprüche, wobei die zugeordneten Speicher SD-Karten sind.

5. Verfahren zur Verwaltung der Konfigurationsdaten eines dem Server zugehörigen Moduls zur Informationsverarbeitung, umfassend eine Vielzahl von verbundenen Modulen, um eine einheitliche Plattform für ein auf dem Server eingesetztes Betriebssystem zu bilden, wobei jedes Modul über eine grundlegende Software verfügt, Basic Input Output Software BIOS (13, 23), und wobei jedes Modul ferner eine Verwaltungssteuerung, BMC (12, 22) umfasst, wobei die Daten für die Inbetriebnahme des Moduls durch die grundlegende Software, BIOS, verwendet werden, wobei das Modul und das Verfahren Folgendes umfasst
- die Modifikation von mindestens einem Satz Konfigurationsdaten;
- das Senden des mindestens einen Satzes Konfigurationsdaten an die Verwaltungssteuerung des Moduls, BMC,
- das Speichern durch die Steuerung, BMC, des mindestens einen Satzes Konfigurationsdaten in einem zugeordneten Speicher, der von dem die grundlegende Software speichernden Speicher getrennt ist, und das Senden der Daten an die Verwaltungssteuerungen, die den anderen Modulen der Vielzahl von Modulen zugeordnet sind.

6. Verfahren nach dem vorstehenden Anspruch, wobei der mindestens eine Satz Konfigurationsdaten bei Inbetriebnahme des Moduls durch die grundlegende Software modifiziert wird, indem eine Mensch-Maschine-Schnittstelle auf einem Endgerät angezeigt wird, das mit dem Server verbunden ist, das einem Benutzer ermöglicht, die Modifikationen der Konfigurationsdaten zu visualisieren und auszuführen.

7. Verfahren nach einem der vorstehenden Ansprüche, wobei der mindestens eine Satz Konfigurationsdaten mittels einer externen Verwaltungsschnittstelle (30) der Steuerung modifiziert wird.

8. Verfahren nach einem der vorstehenden Ansprüche, wobei das Senden des mindestens einen Satzes Konfigurationsdaten zu der Verwaltungssteuerung, BMC, der IPMI-Schnittstelle entsprechen.

9. Verfahren zur Inbetriebnahme eines dem Server zugehörigen Moduls zur Informationsverarbeitung, umfassend eine Vielzahl von verbundenen Modulen, um eine einheitliche Plattform für ein auf dem Server eingesetztes Betriebssystem zu bilden, wobei jedes Modul über eine grundlegende Software verfügt, Basic Input Output Software BIOS (13, 23), die dazu vorgesehen ist, die Konfigurationsdaten bei Inbetriebnahme des Moduls zu verwenden, und wobei jedes Modul ferner eine Verwaltungssteuerung, BMC (12, 22) umfasst, mit
- dem Aussenden durch die grundlegende Software, BIOS, des Moduls, einer Anfrage an die Verwaltungssteuerung, BMC, des Moduls,
- der Wiederherstellung der Konfigurationsdaten durch die Verwaltungssteuerung, BMC, des Moduls, in einem zugeordneten Speicher, der von dem die grundlegende Software, BIOS, speichernden Speicher getrennt ist, und Senden der Daten an die grundlegende Software als Reaktion auf die Anfrage,
- der Inbetriebnahme des Moduls entsprechend der Konfigurationsdaten.

10. Computerprogramm, umfassend Programmanweisungen zum Ausführen eines Verfahrens nach einem der Ansprüche 5 bis 9, wenn dieses Programm auf einem Prozessor ausgeführt wird.

## Claims

1. A server (100) comprising a plurality of information processing modules (1, 2, 3) so as to form a unified platform for an operating system deployed on said server, each module having elementary software, BIOS (13, 23), provided to use configuration data when said module is started up, said server further being provided to allow at least one configuration datum to be modified, and being **characterized in that**
each module further comprises a management controller, BMC (12, 22), provided to store said configuration data in an associated memory (14, 24) separate from the memory storing said elementary software, BIOS, and to transmit, when at least one configuration datum is modified, said data to management controllers associated with the other modules of said plurality, and
**in that** said elementary software is provided to recover said configuration data from said management controller when said module is started up.

2. The server (100) according to the preceding claim, wherein said management controllers (12, 22) of said plurality of modules can communicate by means of a network (28) internal to said server (100).

3. The server (100) according to one of the preceding claims, wherein said management controllers transmit said configuration data in messages in accordance with the IPMI standard.

4. The server (100) according to one of the preceding claims, wherein said associated memories are SD cards.

5. A method for managing configuration data for an information processing module belonging to a server comprising a plurality of modules connected so as to form a unified platform for an operating system deployed on said server, each module having elementary software, BIOS (13, 23), and each module further comprising a management controller, BMC (12.22), said data
being used for the start-up of said module by said elementary software, BIOS, of said module, and said method comprising
- the modification of at least one configuration datum;
- the transmission of said at least one configuration datum to said management controller of the module, BMC,
- the storage by said controller, BMC, of said at least one configuration datum in an associated memory, separate from the memory storing said elementary software, and the transmission of said datum to management controllers associated with the other modules of said plurality.

6. The method according to the preceding claim, wherein said at least one configuration datum is modified during start-up of said module by said elementary software, by displaying a human-machine interface on a terminal connected to said server, enabling a user to visualize and perform modifications on configuration data.

7. The method according to one of the preceding claims, wherein said at least one configuration datum is modified by means of an external management interface (30) of said controller.

8. The method according to one of the preceding claims, wherein the transmissions of said at least one configuration datum to said management controller, BMC, are in accordance with the IPMI interface.

9. A method for starting up an information processing module belonging to a server comprising a plurality of modules connected so as to form a unified platform for an operating system deployed on said server, each module having elementary software, BIOS (13, 23), provided to use configuration data when said module is started up, and each module further comprising a management controller, BMC (12.22), comprising
- the sending, by said elementary software, BIOS, of said module, of a request to said management controller, BMC, of said module,
- the recovery of configuration data by said management controller, BMC, of said module, in an associated memory separate from the memory storing said elementary software, BIOS, and transmission of said data to said elementary software in response to said request,
- start-up of said module on the basis of said configuration data.

10. A computer program comprising program instructions for the execution of a method according to one of claims 5 to 9, when said program is executed on a processor.
